# EUROPÄISCHE PATENTSCHRIFT

(11) **EP 3 133 282 B1**
(45) Veröffentlichungstag und Bekanntmachung des Hinweises auf die Patenterteilung: **13.03.2019**
(21) Anmeldenummer: 16181629.3
(22) Anmeldetag: 28.07.2016
(51) Int. Cl.: F03D 7/02, F03D 7/04

(54) **VERFAHREN UND SYSTEM ZUR ÜBERWACHUNG EINER EINZELBLATTVERSTELLUNG EINER WINDENERGIEANLAGE**
METHOD AND SYSTEM FOR MONITORING AN INDIVIDUAL BLADE ADJUSTMENT OF A WIND POWER SYSTEM
PROCEDE ET SYSTEME DE SURVEILLANCE D'UN DISPOSITIF DE REGLAGE DE PALE INDIVIDUELLE D'UNE EOLIENNE

(30) Priorität: 19.08.2015 DE 102015010686
(43) Veröffentlichungstag der Anmeldung: 22.02.2017
(73) Patentinhaber: Senvion GmbH, 22297 Hamburg (DE)
(72) Erfinder: WARFEN, Karsten, 23795 Söhren/Weede (DE); PLEß, Timo, 24782 Büdelsdorf (DE)
(74) Vertreter: Wallinger Ricker Schlotter Tostmann

(56) Entgegenhaltungen:
- WO-A1-2012/079699
- X. WEI ET AL: "Sensor and actuator fault diagnosis for wind turbine systems by using robust observer and filter", WIND ENERGY, Bd. 14, Nr. 4, 25. November 2010 (2010-11-25), Seiten 491-516, XP055330826, GB ISSN: 1095-4244, DOI: 10.1002/we.438
- Xiukun (john) Wei: "model based condition monitoring of sensors and actuators of large scale wind turbines", , 31. Oktober 2008 (2008-10-31), XP055022751, Gefunden im Internet: URL:http://www.windworkshops.tudelft.nl/fi les/presentaties/4C/Wei/robustobserverbase df.pdf [gefunden am 2012-03-23]
- Stijn Donders: "fault detection and identification for wind turbine systems: a closed-loop analysis", , 30. Juni 2002 (2002-06-30), XP055022750, Gefunden im Internet: URL:http://www.stijndonders.nl/wind/script ie.pdf [gefunden am 2012-03-23]
- HWAS ABDULHAMED ET AL: "Nonlinear observer-based fault detection and isolation for wind turbines", 22ND MEDITERRANEAN CONFERENCE ON CONTROL AND AUTOMATION, IEEE, 16. Juni 2014 (2014-06-16), Seiten 870-875, XP032687237, DOI: 10.1109/MED.2014.6961483 ISBN: 978-1-4799-5900-6 [gefunden am 2014-11-18]
- LAOUTI NASSIM ET AL: "Combination of Model-based Observer and Support Vector Machines for Fault Detection of Wind Turbines", INTERNATIONAL JOURNAL OF AUTOMATION AND COMPUTING, ZHONGGUO KEXUE ZAZHISHE, CN, Bd. 11, Nr. 3, 14. März 2015 (2015-03-14), Seiten 274-287, XP035471140, ISSN: 1476-8186, DOI: 10.1007/S11633-014-0790-9 [gefunden am 2015-03-14]

## Beschreibung

### Beschreibung

Die Erfindung betrifft ein Verfahren und ein System zur Überwachung einer Einzelblattverstellung einer Windenergieanlage, die einen Turm und einen auf dem Turm angeordneten Rotor mit wenigstens zwei individuell pitchverstellbaren Rotorblättern umfasst, denen jeweils ein Pitchantrieb zugeordnet ist, wobei von einer Betriebsführung oder einer Pitchsteuerung der Windenergieanlage ein kollektiver Soll-Pitchwinkel für alle Rotorblätter und/oder individuelle Soll-Pitchwinkel für jedes einzelne Rotorblatt angefordert wird oder werden. Ferner betrifft die Erfindung eine Windenergieanlage mit einem solchen System.

Moderne Windenergieanlagen verfügen für ihre Rotorblätter über eine Einzelblattverstellung des Rotorblatteinstellwinkels, der auch als Pitchwinkel oder kurz "Pitch" bezeichnet wird. Im Volllastbereich wird die Leistung der Windenergieanlagen üblicherweise vorwiegend über die Pitchsteuerung geregelt. Hierzu ist jedem Rotorblatt ein eigener Pitchantrieb sowie eine Einzelpitchregelstrecke bzw. Regelschleife zugeordnet. Der Pitchantrieb eines Rotorblatts umfasst üblicherweise einen Pitchumrichter, der einen Wechselstrom- oder Gleichstrom-Pitchmotor ansteuert, der seinerseits über ein Getriebe im Eingriff mit einem Zahnkranz am der Rotorblattwurzel steht und durch seine Aktion eine Drehung des Rotorblatts um seine Längsachse bewirkt. Der Pitchumrichter ist seinerseits üblicherweise Teil einer Regelschleife.

Die Pitchregelschleife eines Rotorblatts erhält von der Betriebsführung der Windenergieanlage oder einer Pitchsteuerung in der Rotornabe der Windenergieanlage einen individuellen Soll-Pitchwinkel.ln der Pitchregelschleife wird der Pitchantrieb aktiviert, so dass der Ist-Pitchwinkel den Soll-Pitchwinkel erreicht.

Die Überwachung der Pitchregelung oder der "Individual Pitch Regelung" (IPC) einer Windenergieanlage ist sicherheitskritisch. Kritische Lastfälle sind beispielsweise sogenannte Pitch-Run-Away Störfälle, bei denen ein Rotorblatt mit hoher Verstellrate bzw. Pitchrate aus der eigentlich vorgegebenen Pitchposition herausgefahren wird, was zu einer starken Blattasymmetrie und entsprechend hohen Lasten führt. Hierbei besteht ein Zielkonflikt zwischen einer hohen Wirtschaftlichkeit durch seltenes Auslösen und einer hohen Sicherheit bzw. möglichst geringen Belastungen bei Versagensfällen.

Pitch-Run-Away Fälle gehören zu den stärksten Lasten, die im Laufe des Betriebs einer Windenergieanlage auftreten können. Diese Überlegung ist daher auch dimensionierend für die Planung einer Windenergieanlage, denn bereits bei der Konzeption einer Windenergieanlage wird mit eingeplant, welche Lastfälle von der tragenden Struktur ausgehalten werden müssen.

Eine Überwachung der Pitchregelung erfolgt bislang üblicherweise mittels eines Sollwert-Istwert-Vergleichs der Pitchwinkel der Rotorblätter mit dem Sollwert des Pitchregelkreises. Aufgrund der Trägheit des Pitchsystems sind hier relativ weite Toleranzen eingebaut, beispielsweise ±4° oder mehr, so dass Pitch-Run-Away Fälle unter Umständen erst vergleichsweise spät erkannt werden.

Ein Ansatz, diese Problematik einzudämmen, ist aus WO 2012/079699 A1 bekannt. Hierin ist ein Pitchantrieb in einer Windenergieanlage offenbart, der einen Regelkreis mit einer Regelelektronik und einer Stelleinrichtung, eine regelungstechnische Beobachtungseinrichtung, eine Fehlererkennungseinrichtung und eine Anpassungseinrichtung umfasst. Die regelungstechnische Beobachtungseinrichtung führt ein Modell des Regelkreises aus und simuliert somit parallel die Arbeit des Regelkreises. Die Fehlererkennungseinrichtung identifiziert Fehler anhand von Abweichungen zwischen dem Modell und dem Regelkreis, während die Anpassungseinrichtung bei Vorliegen eines Fehlers das Verhalten des Regelkreises im Sinne eines fehlerfreien Verhaltens anpasst, etwa mittels redundant vorgesehener Ersatzregelkreisglieder oder mittels Anpassung des Übertragungsverhaltens der Regelelektronik. Diese Fehlertoleranz erhöht die Verfügbarkeit der Windenergieanlage bei gleichzeitig hoher Betriebssicherheit.

X. WEI ET AL: "Sensor and actuator fault diagnosis for wind turbine systems by using robust observer and filter", WIND ENERGY, Band 14, Nr. 4, Seiten 491 bis 516, beschreibt die Detektion von Fehlern von Sensoren und Aktuatoren für großskalige Windenergieanlagensysteme mit individueller Blattverstellung. Es wird ein dynamisches Modell des Windenergieanlagensystems mittels eines regelungstechnischen Beobachters im finiten Frequenzbereich erstellt und angewendet, um ein Residual für die Fehlerdetektion zu generieren. Dieser regelungstechnische Beobachter ist so ausgestattet, dass er auf Fehler sensitiv ist, gegenüber Störungen wie Windturbulenzen jedoch insensitiv ist. Wenn ein detektierbarer Fehler auftritt, sendet der Beobachter ein Alarmsignal, falls die Residualauswertung größer ausfällt als ein vordefinierter Grenzwert.

S. Donders: "Fault detection and identification for wind turbine systems: a closed-loop analysis", Master's Thesis, University of Twente, 2002, behandelt eine Fehlerdetektion und Identifikation auf der Grundlage eines Modells. Einer der beschriebenen Ansätze ist ein Beobachter-basierter Ansatz, bei dem in einer rauschbehafteten Simulation eines Systems einer Windenergieanlage ein rekursiver Kalman-Filter-Algorithmus bzw. Kalman-Beobachter verwendet wird, um die simulierte herrschende Windgeschwindigkeit sowie den simulierten Verstärkungsfaktor der Blattwinkelverstellantriebe zu bestimmen.

A. HWAS und R. KATEBI, "Nonlinear observer-based fault detection and isolation for wind turbines", 22nd Mediterranean Conference on Control and Automation, Palermo, 2014 befasst sich mit der Entwicklung eines nichtlinearen Beobachter-basierten Schemas für frühe Fehlererkennung und Isolierung in Windenergieanlagen. Es werden ein nichtlinearer Beobachter und ein nichtlineares Modell einer 5 MW Windenergieanlage entwickelt, wobei als Designziel genommen wird, dass das Federdetektionssystem optimiert wird, um auf Systemfehler sensitiv zu sein und am wenigsten sensitiv auf Systemstörungen und Störgeräusche.

Demgegenüber liegt der vorliegenden Erfindung die Aufgabe zugrunde, Windenergieanlagen und ihren Betrieb noch sicherer und effizienter als bislang zu gestalten.

Diese Aufgabe wird durch ein Verfahren zur Überwachung einer Einzelblattverstellung einer Windenergieanlage gelöst, die einen Turm und einen auf dem Turm angeordneten Rotor mit wenigstens zwei individuell pitchverstellbaren Rotorblättern, denen jeweils ein Pitchantrieb zugeordnet ist, wobei von einer Betriebsführung oder einer Pitchsteuerung der Windenergieanlage ein kollektiver Soll-Pitchwinkel für alle Rotorblätter und/oder individuelle Soll-Pitchwinkel für jedes einzelne Rotorblatt angefordert wird oder werden, wobei für zumindest ein Rotorblatt in einer Pitchregelschleife eine Pitchregelung durchgeführt wird, wobei dem Rotorblatt wenigstens ein regelungstechnischer Beobachter zugeordnet ist, der ein dynamisches Pitchverhalten des Rotorblatts simuliert und mit den gleichen Soll-Pitchwinkeln angesteuert wird wie die Pitchregelschleife und einen simulierten Ist-Pitchwinkel ausgibt, wobei für das zumindest eine Rotorblatt der simulierte Ist-Pitchwinkel des wenigstens einen regelungstechnischen Beobachters mit einem gemessenen Ist-Pitchwinkel verglichen wird und bei einer Abweichung des gemessenen Ist-Pitchwinkels vom simulierten Ist-Pitchwinkel, die einen Toleranzwert übersteigt, eine Störabschaltung der Windenergieanlage eingeleitet wird, dadurch gekennzeichnet, dass für jedes Rotorblatt wenigstens zwei voneinander messtechnisch unabhängige Pitchwinkel-Istwertgeber vorgesehen sind, die jeweils einen gemessenen Ist-Pitchwinkel ausgeben, wobei die wenigstens zwei gemessenen Ist-Pitchwinkel miteinander und mit dem entsprechenden simulierten Ist-Pitchwinkel verglichen werden, wobei zur Überwachung des oder der Pitchwinkel-Istwertgeber eine Zwangsdynamisierung in Form von regelmäßigen Blattverstellungen um kleine Winkelbeträge durchgeführt wird.

Gemäß einer vorteilhaften Ausführungsform ist das Verfahren dadurch fortgebildet, dass für jedes Rotorblatt jeweils in einer eigenen Pitchregelschleife eine individuelle Pitchregelung durchgeführt wird, wobei jedem Rotorblatt wenigstens ein regelungstechnischer Beobachter zugeordnet ist, der ein dynamisches Pitchverhalten des Rotorblatts simuliert und mit den gleichen Soll-Pitchwinkeln angesteuert wird wie die jeweilige Pitchregelschleife und einen simulierten individuellen Ist-Pitchwinkel ausgibt, wobei für alle Rotorblätter der jeweilige simulierte individuelle Ist-Pitchwinkel des wenigstens einen regelungstechnischen Beobachters mit einem jeweiligen gemessenen individuellen Ist-Pitchwinkel verglichen wird und bei einer Abweichung des gemessenen individuellen Ist-Pitchwinkels vom simulierten individuellen Ist-Pitchwinkel, die einen Toleranzwert übersteigt, eine Störabschaltung der Windenergieanlage eingeleitet wird.

Ferner ist das Verfahren insbesondere dadurch fortgebildet, dass für alle Rotorblätter der Windenergieanlage in einer gemeinsamen Pitchregelschleife eine Pitchregelung durchgeführt wird, wobei den Rotorblättern wenigstens ein regelungstechnischer Beobachter zugeordnet ist, der ein dynamisches Pitchverhalten aller Rotorblätter simuliert und mit den gleichen Soll-Pitchwinkeln angesteuert wird wie die Pitchregelschleife und einen simulierten Ist-Pitchwinkel ausgibt, wobei für alle Rotorblätter der simulierte Ist-Pitchwinkel des wenigstens einen regelungstechnischen Beobachters mit einem jeweiligen gemessenen individuellen Ist-Pitchwinkel verglichen wird und bei einer Abweichung des gemessenen individuellen Ist-Pitchwinkels vom simulierten Ist-Pitchwinkel, die einen Toleranzwert übersteigt, eine Störabschaltung der Windenergieanlage eingeleitet wird.

Mit anderen Worten ist wahlweise vorgesehen, dass für jedes Rotorblatt jeweils in einer eigenen Pitchregelschleife eine individuelle Pitchregelung durchgeführt wird oder aber dass für alle Rotorblätter der Windenergieanlage in einer gemeinsamen Pitchregelschleife eine Pitchregelung durchgeführt wird.

Im Unterschied zum bekannten Stand der Technik, beispielsweise der zuvor erwähnten WO 2012/079699 A1, ermöglicht der Einsatz wenigstens eines regelungstechnischen Beobachters für zumindest ein Rotorblatt, beispielsweise für jedes einzelne Rotorblatt oder für alle Rotorblätter der Windenergieanlage, zur Kontrolle der Ist-Pitchwinkel der Rotorblätter nicht nur einen sicheren, sondern auch einen besonders effizienten Betrieb. Es wird eine schwächere und somit kostengünstigere Dimensionierung der Windenergieanlag, vor allem der Tragstruktur, möglich. Anders als in WO 2012/079699 A1 liegt der Schwerpunkt des Einsatzes allerdings nicht vorrangig in der Fehlertoleranz, sondern in einer besonders frühzeitigen Erkennung und Vermeidung von Lastfällen durch Pitchasymmetrien durch eine frühzeitige Störabschaltung. Damit ist das erfindungsgemäße Verfahren an sich nicht fehlertolerant.

Im Unterschied zum Stand der Technik, in dem eine Störabschaltung bei Pitch-Run-Away Fällen erst bei Fehlstellungen von typischerweise mehr als 4° und somit bereits erheblichen Rotorblattasymmetrien erfolgt, werden bei der erfindungsgemäßen Überwachung die gemessenen Ist-Pitchwinkel mit den simulierten Ist-Pitchwinkeln der regelungstechnischen Beobachter verglichen. Diese werden, beispielsweise während der Inbetriebnahme der Windenergieanlage, so an die realen Reaktionen des jeweiligen Rotorblatts angepasst, dass sie eine sehr genaue Vorhersage treffen können, wie der Ist-Pitchwinkel des realen Rotorblatts sich unter den herrschenden Bedingungen verhält. Der simulierte Ist-Pitchwinkel wird daher sehr viel näher am realen Ist-Pitchwinkel liegen als der Soll-Pitchwinkel, der bislang als Vergleichsgröße verwendet wurde. Entsprechend enger kann die Toleranz gezogen werden, beispielsweise bei ±1,2° oder weniger. So kann ein realer Pitch-Run-Away Fall bereits nach einer Verdrehung um maximal 2,4° erkannt werden. Es liegt eine deutlich kleinere und beherrschbare Rotorblattasymmetrie, die nur noch 1,2° anstelle von 4° oder mehr beträgt, vor. Dies führt zu deutlich geringeren Lasten im Pitch-Run-Away Fall, so dass die Windenergieanlage deutlich schwächer und damit kostengünstiger dimensioniert werden kann. Dies steigert wiederum die Effizienz und Wirtschaftlichkeit der Windenergieanlage insgesamt. Mit einer reinen Erhöhung der Fehlertoleranz ist dieses Ergebnis nicht darstellbar.

In lastarmen Situationen, beispielsweise bei Pitchwinkeln der Rotorblätter in der Nähe der Fahnenstellung, beispielsweise bei 80° oder mehr, kann die Toleranz erhöht werden, beispielsweise auf das 3-fache, etwa auf ±3,5°. So können die regelungstechnischen Beobachter immer aktiv sein und im Bereich der Endschalter durch die Blattbremsung beim Endschalter keine unnötige Störabschaltung auslösen.

Die vorgenannten Toleranzen sind lediglich als beispielhaft zu begreifen und für jeden Anlagentyp und gegebenenfalls jede Anlage separat zu optimieren.

Das Verfahren gemäß Aspekten der Erfindung wird vorzugsweise zusätzlich zum bislang praktizierten Verfahren der Istwert-Sollwert-Überwachung in der Pitchregelung eingesetzt, das dann als Auffangprozess dient, wenn das erfindungsgemäße Überwachungsverfahren einen Störfall beispielsweise wegen eines Ausfalls des regelungstechnischen Beobachters oder anderer Probleme, beispielsweise in der Ansteuerung des regelungstechnischen Beobachters, nicht erkannt haben sollte.

Wenn vorteilhafterweise zusätzlich Sollwerte überwacht werden, die der insbesondere individuellen Pitchregelung zugrunde liegen, wobei ferner insbesondere die Sollwert-Überwachung in der Gondel und/oder in der Rotornabe erfolgt, ist eine weitere signifikante Steigerung der Betriebssicherheit, langfristige Lastenreduktion und hohe Betriebsverfügbarkeit gewährleistet. Eine Überwachung der Sollwerte an sich ist bislang noch nicht durchgeführt worden, da konventionell für die Betriebssicherheit einer Windenergieanlage bei der Pitchsteuerung die Überwachung der IstWerte das entscheidende Kriterium darstellt. Fehlerhafte Sollwerte für die Pitchwinkel können jedoch eine mögliche Fehlerquelle für das Verfahren gemäß Aspekten der Erfindung darstellen. Unnötige Störabschaltungen können beispielsweise auftreten, wenn der regelungstechnische Beobachter signifikant unterschiedliche Sollwerte empfängt als der Pitchregler. Dies kann beispielsweise auftreten, wenn der Beobachter in der Betriebsführung im Maschinenhaus der Windenergieanlage angeordnet ist und somit über einen Schleifring vom zugeordneten Pitchregler getrennt ist. Andererseits kann dies auch passieren, wenn der Beobachter in der Rotornabe untergebracht ist, aber eine Signalstörung vorliegt.

Einen weiteren Vorteil hat die Sollwertüberwachung dahingehend, dass die Sollwerte an sich auf ihre Konformität mit vorher festgelegten beherrschbaren Betriebsbedingungen überwacht werden. Vor allem, wenn die Sollwerte innerhalb solcher beherrschbarer Betriebsparameter liegen, ist auch gewährleistet, dass der Beobachter das Verhalten des zugeordneten Pitchreglers auch so getreu abbildet, dass ein enger Toleranzbereich für den Vergleich von simuliertem und gemessenem Ist-Pitchwinkel angesetzt werden kann. So wird mit höherer Sicherheit gewährleistet, dass das erfindungsgemäße Verfahren nicht nur Lasten im Leben einer Windenergieanlage gering hält, sondern auch eine hohe Verfügbarkeit der Windenergieanlage sichergestellt wird. Entsprechend kostengünstiger kann die Windenergieanlage dimensioniert werden.

In diesem Zusammenhang der Sollwert-Überwachung der Soll-Pitchwinkel wird vorzugsweise überwacht, dass die individuellen Soll-Pitchwinkel sich innerhalb eines Toleranzwerts von einem Mittelwert der individuellen Soll-Pitchwinkel oder von einem kollektiven Soll-Pitchwinkel befinden. Damit wird die gesamte Rotorasymmetrie beherrschbar gehalten. Übermäßige Rotorasymmetrien können zu Betriebszuständen mit unzulässigen Belastungen für die Windenergieanlage führen. Außerdem können sie mit einem regelungstechnischen Beobachter schlecht abgebildet werden.

Ebenfalls vorteilhafterweise erfolgt in der Sollwert-Überwachung eine Überwachung einer kollektiven Sollwertrate und/oder individueller Sollwertraten, wobei insbesondere die kollektive Sollwertrate in einem Bereich von -5°/s bis +9°/s, insbesondere -3,5°/s bis +7,5°/s und/oder die individuellen Sollwertraten in einem Bereich von ±0,5°/s sein sollten. Die genannten Zahlenwerte sind additiv zu verstehen, d.h. kollektive und individuelle Sollwertraten werden für das einzelne Einzelblattverstellsystem addiert. Die Begrenzung der Rate, mit der sich ein Sollwert des Pitchwinkels verändern darf, sichert zum einen die Einhaltung von zulässigen Belastungszuständen für die Windenergieanlage. Zum anderen verbessern sie die Genauigkeit der Simulation. Die Grenzen werden vorzugsweise so gesetzt, dass eine ausreichend schnelle Antwort auf externe Lasten, beispielsweise starke Windböen, möglich bleibt.

Vorzugsweise wird ein Absolutbereich des oder der Soll-Pitchwinkel überwacht, wobei der Absolutbereich insbesondere zwischen -4° und +96° ist. Damit wird verhindert, dass die Rotorblätter in Pitchwinkelbereiche gefahren werden, für die die Windenergieanlage nicht ausgelegt ist. Diese Form der Überwachung dient der Erkennung grundsätzlicher Softwarefehler im Regelungssystem. Die oben genannten Winkelwerte sind im Kontext der vorliegenden Beschreibung so definiert, dass der Winkelbereich um 0° die Teillastbetriebsstellung des Rotors und der Bereich um 90° die Stoppstellung, auch als Fahnenstellung bezeichnet, beschreibt.

In einer vorteilhaften Weiterbildung wird eine minimale Sollwertrate bei großen Soll-Pitchwinkeln gegenüber kleineren Soll-Pitchwinkeln betragsmäßig reduziert, insbesondere auf weniger als 60% der betragsmäßig größeren minimalen Sollwertrate. Die Begrenzung der minimalen Sollwertrate in Abhängigkeit vom Blattwinkel, beispielsweise dem gemittelten Ist- oder Sollwert, hat den Vorteil, dass die minimale Pitchrate, d.h. das Blattverstellen in Richtung Betriebsstellung restriktiver begrenzt wird. Da es lastentechnisch am gefährlichsten ist, ist hier ein erhöhter Aufwand gerechtfertigt. Aus aerodynamischen Gründen werden in diesem Fall bei größeren Blattwinkeln über ein sogenanntes Gain-Scheduling die vom Regler angeforderten Pitchraten reduziert.

Der oder die regelungstechnische/n Beobachter für das zumindest eine Rotorblatt sind vorzugsweise in der Rotornabe und/oder in der Gondel und/oder im Turm angeordnet. Der regelungstechnische Beobachter ist beispielsweise auf einem oder mehreren Mikroprozessoren implementiert. Diese sind beispielsweise in einer Nabenbox und/oder einer Topbox in der Gondel oder auch in einer Turm- oder Bodenbox vorhanden bzw. angeordnet. Die Anordnung in der Rotornabe hat den Vorteil, dass Störungen über den Schleifring zwischen Rotornabe und Gondel ausgeschaltet werden, während eine Anordnung in der Gondel solche Störungen berücksichtigt. Eine Anordnung eines Beobachters in der Gondel oder im Turm und eines weiteren in der Rotornabe ist für eine Fehlererkennung besonders vorteilhaft. Eine solche Anordnung ist besonders vorteilhaft, da Übertragungsstörungen, welche durch den Schleifring zwischen der Rotornabe und der Gondel bedingt sind, entfallen. Da der Beobachter direkt in der Rotornabe angeordnet ist, entfällt nämlich die Notwendigkeit, Messsignale über dem Schleifring vom beweglichen in den feststehenden Teil der Anlage zu übertragen.

Eine hohe Verfügbarkeit bei gleichzeitig weiterhin hoher Betriebssicherheit ist vorteilhafterweise erreicht, wenn für jedes Rotorblatt wenigstens zwei voneinander messtechnisch unabhängige Pitchwinkel-Istwertgeber vorgesehen sind, die jeweils einen gemessenen Ist-Pitchwinkel ausgeben, wobei die wenigstens zwei gemessenen Ist-Pitchwinkel miteinander und mit dem entsprechenden simulierten Ist-Pitchwinkel verglichen werden. Solche Pitchwinkel-Istwertgeber sind beispielsweise ein Pitchwinkel-Istwertgeber, der im Pitchantrieb vorhanden ist und Pitchänderungen über die Drehzahl des Pitchmotors berechnet. Über das bekannte Getriebeverhältnis im Pitchgetriebe kann dann der aktuelle Pitchwinkel ermittelt werden. Ein weiterer Pitchwinkel-Istwertgeber kann eine direkte Messung des Pitchwinkels über optische oder magnetische Drehgeber an der Rotorblattwurzel bzw. der Rotorblattlagerung ausführen. Ein Unterschied zwischen den Messwerten dieser beiden Typen von Istwertgebern ist unter anderem durch das Getriebespiel bzw. die Getriebelose im Pitchgetriebe bedingt. Die Verwendung von zwei unabhängigen Pitchwinkel-Istwertgebern ermöglicht die Identifizierung eines fehlerhaften Sensors über den Beobachter.

In diesem Zusammenhang sind mehrere Auswertungen vorteilhafterweise möglich. Zwei vorteilhafte Alternativen hierzu sehen vor, dass bei einer signifikanten Abweichung eines gemessenen Ist-Pitchwinkels sowohl vom anderen gemessenen Ist-Pitchwinkel als auch vom simulierten Ist-Pitchwinkel ein Fehler des abweichenden Pitchwinkel-Istwertgebers festgestellt wird und/oder dass bei einer Übereinstimmung der gemessenen Ist-Pitchwinkel untereinander und einer gleichzeitigen Abweichung der gemessenen Ist-Pitchwinkel vom simulierten Ist-Pitchwinkel eine Störabschaltung eingeleitet wird. Hier findet eine gegenseitige Überwachung der beiden gemessenen Ist-Pitchwinkel und des simulierten Ist-Pitchwinkels statt. Im erstgenannten Fall, dass ein Fehler eines abweichenden Pitchwinkel-Istwertgebers festgestellt wird, wird die Verfügbarkeit der Windenergieanlage erhöht, wenn vorteilhafterweise nach dem Feststellen eines Fehlers eines Pitchwinkel-Istwertgebers eine Geberumschaltung erfolgt und die Windenergieanlage wieder in Betrieb genommen wird.

Ohne dass der Beobachter herangezogen wird, können auch die beiden Pitchwinkel-Istwertgeber miteinander verglichen werden. Bei einer Abweichung der jeweils erfassten Messwerte kann direkt eine Störabschaltung erfolgen.

Da die Pitchwinkel-Istwertgeber üblicherweise nur sehr wenig voneinander abweichen, kann eine Toleranz für die Abweichungen der Messwerte der Pitchwinkel-Istwertgeber voneinander scharf eingestellt werden, beispielsweise auf 0,3° bis 0,8°. Damit wird bei Fehlern der Istwertgeber noch schneller reagiert.

Im Falle zweier oder mehrerer Pitchwinkel-Istwertgeber kann die Regelung stabilisiert werden, wenn, solange die Pitchwinkel-Istwertgeber funktionieren, die gemessenen Ist-Pitchwinkel für die insbesondere individuelle Pitchregelung zur Rückführung in die jeweilige Regelschleife miteinander gemischt werden, insbesondere mit Gewichtungen in einem Bereich von 70:30 bis 30:70, insbesondere 50:50. Damit belasten Fehler einzelner Istwertgeber die Anlage nur noch mit halber "Fehler-Performance". Beispielsweise die Getriebelose wird so bereits halb ausgeregelt, ohne dass der Pitchmotor vom Istwert abgekoppelt ist. Dies verringert den Stress für die Regelstrecke.

Eine sichere Pitchregelung bei hoher Verfügbarkeit erfordert, dass die Pitchwinkel-Istwertgeber funktionieren. Um dies sicherzustellen, wird zur Überwachung des oder der Pitchwinkel-Istwertgeber eine Zwangsdynamisierung in Form von regelmäßigen Blattverstellungen um kleine Winkelbeträge durchgeführt. Dies bedeutet, dass die Soll-Pitchwinkel im laufenden Betrieb jeweils um kleine Beträge, üblicherweise Bruchteile von einem Grad, verändert werden und überwacht wird, dass die Pitchwinkel-Istwertgeber diesen kleinen Änderungen im Rahmen der Trägheit des Pitchsystems auch folgen. Dies dient ebenfalls zur Überwachung der grundsätzlichen Funktion des Pitchsystems. Da die kleinen Winkelbeträge deutlich kleiner sind als die Verstellungen in Reaktion auf sich ändernde Windverhältnisse oder die Blattverstellung im Umlauf des Rotorblatts, haben die kleinen Blattverstellungen der Zwangsdynamisierung keinen nennenswerten Einfluss auf die Leistungsausbeute.

Die der Erfindung zugrunde liegende Aufgabe wird auch durch ein System zur Überwachung einer Einzelblattverstellung einer Windenergieanlage gelöst, die einen Turm und einen auf dem Turm angeordneten Rotor mit wenigstens zwei individuell pitchverstellbaren Rotorblättern, denen jeweils ein Pitchantrieb zugeordnet ist, wobei eine Betriebsführung oder eine Pitchsteuerung der Windenergieanlage ausgebildet ist, einen kollektiven Soll-Pitchwinkel für alle Rotorblätter und/oder individuelle Soll-Pitchwinkel für jedes einzelne Rotorblatt anzufordern, wobei für zumindest ein Rotorblatt eine Pitchregelschleife umfasst ist, mittels der eine Pitchregelung durchgeführt wird, wobei dem Rotorblatt wenigstens ein regelungstechnischer Beobachter zugeordnet ist, der ein dynamisches Pitchverhalten des Rotorblatts simuliert, der mit den gleichen Soll-Pitchwinkeln angesteuert wird wie die Pitchregelschleife und der ausgebildet ist, einen simulierten Ist-Pitchwinkel auszugeben, wobei eine Überwachungsvorrichtung umfasst ist, die ausgebildet ist, für das zumindest eine Rotorblatt den simulierten Ist-Pitchwinkel des regelungstechnischen Beobachters mit einem gemessenen Ist-Pitchwinkel zu vergleichen und bei einer Abweichung des gemessenen Ist-Pitchwinkels vom simulierten Ist-Pitchwinkel, die einen Toleranzwert übersteigt, eine Störabschaltung der Windenergieanlage einzuleiten, wobei das System dadurch fortgebildet ist, dass für jedes Rotorblatt wenigstens zwei voneinander messtechnisch unabhängige Pitchwinkel-Istwertgeber vorgesehen sind, die jeweils einen gemessenen Ist-Pitchwinkel ausgeben, wobei die wenigstens zwei gemessenen Ist-Pitchwinkel miteinander und mit dem entsprechenden simulierten Ist-Pitchwinkel verglichen werden, wobei das System ausgebildet ist, zur Überwachung des oder der Pitchwinkel-Istwertgeber eine Zwangsdynamisierung in Form von regelmäßigen Blattverstellungen um kleine Winkelbeträge durchzuführen.

Gemäß einer Ausführungsform ist das System dadurch fortgebildet, dass für jedes Rotorblatt jeweils eine eigene Pitchregelschleife umfasst ist, mittels der eine individuelle Pitchregelung durchgeführt wird, wobei jedem Rotorblatt wenigstens ein regelungstechnischer Beobachter zugeordnet ist, der ein dynamisches Pitchverhalten des Rotorblatts simuliert, der mit den gleichen Soll-Pitchwinkeln angesteuert wird wie die jeweilige Pitchregelschleife und der ausgebildet ist, einen simulierten individuellen Ist-Pitchwinkel auszugeben, wobei eine Überwachungsvorrichtung umfasst ist, die ausgebildet ist, für alle Rotorblätter den jeweiligen simulierten individuellen Ist-Pitchwinkel des regelungstechnischen Beobachters mit einem jeweiligen gemessenen individuellen Ist-Pitchwinkel zu vergleichen und bei einer Abweichung des gemessenen individuellen Ist-Pitchwinkels vom simulierten individuellen Ist-Pitchwinkel, die einen Toleranzwert übersteigt, eine Störabschaltung der Windenergieanlage einzuleiten.

Ferner ist insbesondere vorgesehen, dass das System dadurch fortgebildet ist, dass für alle Rotorblätter der Windenergieanlage eine gemeinsame Pitchregelschleife umfasst ist, mittels der eine Pitchregelung durchgeführt wird, wobei den Rotorblättern wenigstens ein regelungstechnischer Beobachter zugeordnet ist, der ein dynamisches Pitchverhalten aller Rotorblätter simuliert, der mit den gleichen Soll-Pitchwinkeln angesteuert wird wie die gemeinsame Pitchregelschleife und der ausgebildet ist, einen simulierten Ist-Pitchwinkel auszugeben, wobei eine Überwachungsvorrichtung umfasst ist, die ausgebildet ist, für alle Rotorblätter den simulierten Ist-Pitchwinkel des regelungstechnischen Beobachters mit einem jeweiligen gemessenen individuellen Ist-Pitchwinkel zu vergleichen und bei einer Abweichung des gemessenen individuellen Ist-Pitchwinkels vom simulierten Ist-Pitchwinkel, die einen Toleranzwert übersteigt, eine Störabschaltung der Windenergieanlage einzuleiten.

Ferner ist die Betriebsführung oder die Pitchsteuerung der Windenergieanlage dazu ausgebildet bzw. dazu eingerichtet, eine Pitchregelung durchzuführen. Hierbei ist wahlweise eine eigene Pitchregelschleife für jedes Rotorblatt oder eine gemeinsame Pitchregelschleife für alle Rotorblätter der Windenergieanlage vorgesehen.

Das System gemäß Aspekten der Erfindung bildet im Wesentlichen das zuvor beschriebene Verfahren gemäß Aspekten der Erfindung ab und teilt daher mit diesem gleiche oder ähnliche Merkmale, Eigenschaften und Vorteile. Dazu weist die Überwachungsvorrichtung vorzugsweise Mittel auf und ist ausgebildet und eingerichtet, das zuvor genannte erfindungsgemäße Verfahren auszuführen, wobei insbesondere die Überwachungsvorrichtung ganz oder teilweise in die Betriebsführung und/oder in den Pitchregler und/oder in die Einzelblattsteuerung der Windenergieanlage integriert ist.

Die der Erfindung zugrunde liegende Aufgabe wird ferner durch eine Windenergieanlage mit einem Turm und einem auf dem Turm angeordneten Rotor mit wenigstens zwei individuell pitchverstellbaren Rotorblättern, denen jeweils ein Pitchantrieb zugeordnet ist, gelöst, die dadurch weitergebildet ist, dass die Windenergieanlage ein zuvor beschriebenes erfindungsgemäßes System zur Überwachung einer Einzelblattverstellung umfasst. Auch die Windenergieanlage gemäß Aspekten der Erfindung teilt somit gleiche oder ähnliche Vorteile, Eigenschaften und Merkmale des Verfahrens und Systems gemäß Aspekten der Erfindung.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen, wobei der Schutzbereich durch die beigefügten Ansprüche definiert wird.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Windenergieanlage,
- Fig. 2: eine schematische Darstellung eines Pitchsystems eines dreiblättrigen Rotors,
- Fig. 3: eine schematische Darstellung eines Ausführungsbeispiels einer Pitchsteuerung,
- Fig. 4: eine schematische Darstellung eines regelungstechnischen Beobachters für eine Pitchregelung,
- Fig. 5: eine schematische Darstellung eines Details eines weiteren Ausführungsbeispiels einer Pitchsteuerung,
- Fig. 6: eine schematische Darstellung eines Ausführungsbeispiels einer Überwachung und
- Fig. 7: eine schematische Darstellung eines weiteren Ausführungsbeispiels einer Überwachung.

In den Zeichnungen sind jeweils gleiche oder gleichartige Elemente und/oder Teile mit denselben Bezugsziffern versehen, so dass von einer erneuten Vorstellung jeweils abgesehen wird.

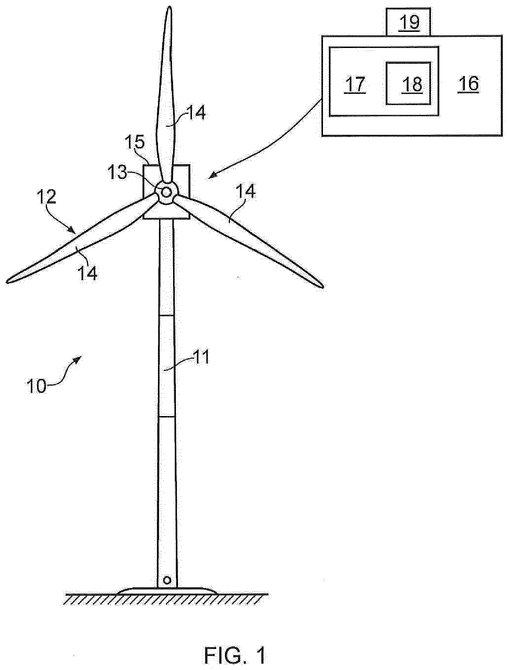

Fig. 1 zeigt eine schematische Darstellung einer Windenergieanlage 10. Die Windenergieanlage 10 weist einen Turm 11 und einen Rotor 12 auf, der drei Rotorblätter 14 umfasst, die auf einer Rotornabe 13 angebracht sind. Die Rotornabe 13 treibt einen Generator (nicht dargestellt) an, der in einer Gondel 15 an der Spitze des Turms 11 angeordnet ist. Bei Windeinfall dreht sich der Rotor 12 durch eine azimutale Drehung der Gondel 15 in den Wind. Hierdurch kann Leistung von dem Generator erzeugt werden und in ein Verbrauchernetz abgegeben werden.

Die Windenergieanlage 10 umfasst ferner eine schematisch dargestellte Betriebsführung 16, die in elektronischen Steuerkomponenten in der Gondel 15 oder auch im Turm 11 oder im Turmfuß verwirklicht sind. Die Betriebsführung 16 umfasst eine oder kommuniziert mit einem Pitchregler 17, der seinerseits wiederum eine Einzelblattsteuerungen 18 für die Rotorblätter 14 umfasst. Dazu übermittelt die Betriebsführung 16 dem Pitchregler 17 Vorgaben zur Ermittlung eines kollektiven Pitchwinkels für die Rotorblätter 14 oder individueller Pitchwinkel für die einzelnen Rotorblätter 14. Ferner ist eine Überwachungsvorrichtung 19 für das Rotorblattverstellsystem vorgesehen. Das Rotorblattverstellsystem kann einzeln ausgeführt, in der Betriebsführung 16, dem Pitchregler 17 oder in der Einzelblattsteuerung 18 ausgebildet sein.

Zur Rotorblattverstellung gibt der Pitchregler 17 Soll-Blattwinkel für die Rotorblätter 14 aus, die der momentanen Windstärke, Rotordrehzahl und Leistungserzeugung sowie gegebenenfalls weiteren Betriebsparametern wie Turmschwankungen o.ä. angepasst ist. Die im Pitchregler 17 umfasste Einzelblattsteuerung 18 gibt drei individuelle Soll-Einzelblattwinkel aus, anhand derer die Rotorblätter 14 in ihrem Umlauf verstellt werden. Diese Soll-Einzelblattwinkel können um den kollektiven Soll-Blattwinkel herum oszillieren. Alternativ kann der Pitchregler 17 oder die Einzelblattsteuerung 18 auch Blattverstellraten oder Drehzahlen für die Pitchantriebe 7 ausgeben, die benötigt werden, um den gewünschten Soll-Blattwinkel anzufahren.

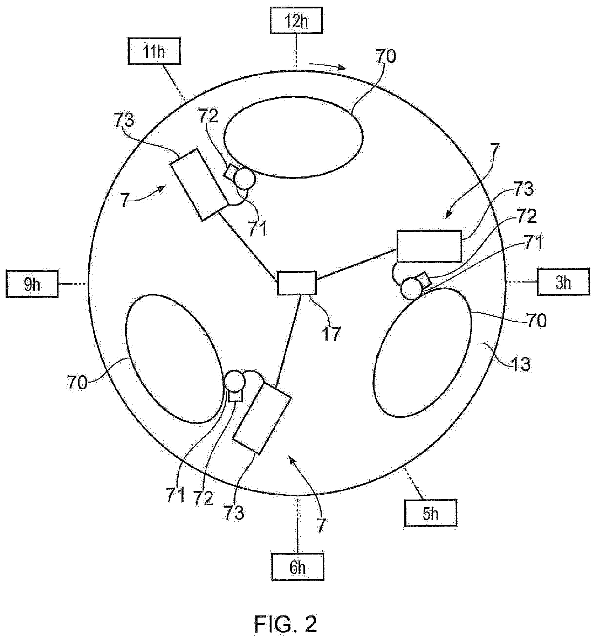

Fig. 2 zeigt schematisch eine Ansicht in eine Rotornabe 13 hinein mit drei Rotorblattanschlüssen 70, die in Winkelabständen von 120° zueinander angeordnet sind. Jedem Rotorblattanschluss 70 ist jeweils ein Blattverstellantrieb bzw. Pitchantrieb 7 zugeordnet, der die Komponenten Pitchmotor 71, Pitchbremse 72 und Pitchumrichter 73 umfasst, die jeweils schematisch dargestellt sind. Die Pitchumrichter 73 versorgen die Pitchmotoren 71 jeweils mit Gleich- oder Wechselstrom, abhängig vom Typ des Pitchmotors 71 als AC- oder DC-Motor, damit diese die Rotorblätter an den Rotorblattanschlüssen 70 drehen können. Die Pitchbremsen 72 werden angelegt, die Rotorblätter also eingebremst, wenn die Pitchumrichter 73 deaktiviert werden.

Alle drei Pitchumrichter 73 sind mit einer zentralen Pitchsteuerung 17 verbunden, die mit einer nicht dargestellten Betriebsführung 16 verbunden ist und Anforderungen für Pitchregelungen erhält und dafür sorgt, dass die Pitchantriebe 7 die Rotorblätter in die gewünschte Pitchposition fahren.

Außerhalb der Rotornabe 13 sind zusätzlich einige Rotorblattpositionen dargestellt, nämlich zuoberst die 12-Uhr-Position ("12h"), die 3-Uhr-Position ("3h"), die 5-Uhr-Position ("5h"), die 6-Uhr-Position ("6h"), die 9-Uhr-Position ("9h") und die 11-Uhr-Position ("11h"). Dies unterstellt eine Rotation der Rotornabe 13 gemäß dem Pfeil neben der 12h-Position im Uhrzeigersinn. Die Rotorblätter 14 unterliegen im Betrieb Belastungen aus der Gravitation sowie der Aerodynamik, die zu Torsionsmomenten führen und zu Bewegungen innerhalb des Getriebespiels des Pitchantriebs 7 führen können. Bezüglich der in Fig. 2 nicht dargestellten Gravitationsrichtung, die nach unten in die 6h-Richtung zeigt, stehen die Rotorblätter jeweils in der 3h-Position und in der 9h-Position waagerecht. Unter der Annahme, dass der Gravitationseffekt dominiert, sind die Rotorblätter in den waagerechten Positionen in Bezug auf ihre Pitchposition und das Getriebespiel durch große Torsionsmomente optimal festgelegt.

Etwa in der 5h-Position und der 11h-Position befinden sich die Rotorblätter zusätzlich in einer Position geringen Drehmoments, das auf die Rotorblätter in Bezug auf ihre Pitchposition ausgeübt wird und gleichzeitig noch immer in Bezug auf das Spiel bzw. die Getriebelose einer definierten Position, da die Blätter aus dem Bereich der großen Torsionsmomente kommen. Somit sind diese Positionen bzw. Bereiche um diese Position herum beispielsweise ideal sind zum Einleiten der Überführung in die Rückstellung, d.h. zum Deaktivieren der Pitchumrichter 73 und zum Einbremsen der Rotorblätter. Die genannten Positionen sind ideal, da die Position im Getriebespiel eindeutig definiert ist und zugleich geringe Torsionsmomente vorliegen, die beim Einbremsen des Pitchantriebs ein Durchrutschen vermeiden. Unterschiedliche Blattgeometrien sowie die Dominanz aerodynamischer Effekte können die bevorzugten Winkelpositionen verändern, so dass diese für die jeweilige Rotorkonfiguration in Simulationsrechnungen oder Messungen zu ermitteln sind.

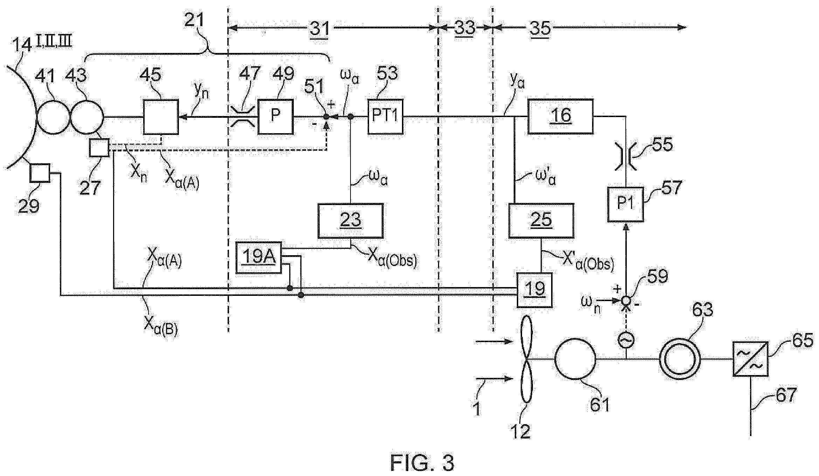

In Fig. 3 ist ein Ausführungsbeispiel einer erfindungsgemäßen Pitchsteuerung schematisch dargestellt. Einzelne Details der Gesamtsteuerung sind dabei nicht als einschränkend zu verstehen, sondern stellen lediglich ein Beispiel möglicher Betriebsführungen einer Windenergieanlage dar.

Im rechten unteren Bereich ist der Rotor 12 angedeutet, der mit Wind 1 beaufschlagt wird und über ein Getriebe 61 einen Generator 63 ansteuert, der über einen Umrichter 65 Leistung über einen Netzanschluss 67 in ein nicht dargestelltes Stromnetz einspeist.

Eine erste zentrale Stelle bei der Leistungsregelung der Windenergieanlage ist ein Differenzbilder 59, der eine Differenz aus einer Soll-Drehzahl *wₙ* und einer gemessenen Ist-Drehzahl *n* an der schnellen Welle des Triebstrangs zwischen Getriebe 61 und Generator 63 bildet. Dies ist der Anfang einer Leistungsregelstrecke. Die Differenz zwischen der Soll-Drehzahl wₙ und der Ist-Drehzahl *n* wird über ein PI-Regelglied 57 und ein Begrenzungsglied 55 in die Betriebsführung 16 eingeführt, die eine Blattwinkelsteuerung bzw. eine Pitchsteuerung umfasst.

Diese Komponenten sind, wie oben in Fig. 3 zu erkennen ist, in der Gondel 15 bzw. in einer Topbox 35 der Gondel 15 untergebracht. Die weiteren Komponenten des Pitchsystems sind in einer Pitchsteuerung 31 in der Rotornabe 13 untergebracht, die über einen Schleifring (auch als Drehüberträger bezeichnet) 33 mit der Gondel 15 verbunden ist.

Die Pitchsteuerung oder die Betriebsführung 16 errechnet aus dem Differenzsignal der Drehzahl sowie weiteren Betriebsparametern und Informationen einen Pitch-Ausgabewert *y_{α}*, der in ein Verzögerungsglied erster Ordnung 53 eingegeben wird, das einen Soll-Pitchwinkel *w_{α}* an einen weiteren Differenzbilder 51 eingibt. Dies stellt den Eingang der Pitchregelstrecke 21 dar. Im Differenzbilder 51 wird der Soll-Pitchwinkel *w_{α}* mit einem Ist-Pitchwinkel bzw. Pitchwinkel-Istwert *x_{α(A)}* von einem Pitchwinkel-Istwertgeber 27 verglichen und die Differenz über ein P-Regelglied 49 und einen Begrenzer 47 in einen Ausgangswert für eine Drehzahl *yₙ* für einen Umrichter 45 des Pitchantriebs umgesetzt, der einen vorliegend als Gleichstrommotor ausgebildeten Pitchmotor 43, ein Pitchgetriebe 41 und den Umrichter 45 umfasst, sowie üblicherweise eine nicht dargestellte Pitchbremse. Im Kontext der vorliegenden Beschreibung liefert der Umrichter 45 einen Gleichstrom, sofern Gleichstrommotoren verwendet bzw. von diesem angesteuert werden. Ebenso ist der Umrichter 45 dazu eingerichtet, Wechselstrommotoren mit Wechselstrom zu versorgen.

Die Pitchregelschleife 21 reagiert so, dass bei Abweichungen zwischen dem gemessenen Pitchwinkel-Istwert *x_{α(A)}* und dem Soll-Pitchwinkel *w_{α}* ein Drehzahlsollwert an den Umrichter 45 eingegeben wird, der daraufhin einen entsprechenden Versorgungsstrom generiert, mit dem der Pitchmotor 43 betrieben wird. Der Istwertgeber 27 gibt an den Umrichter 45 außerdem eine Rückmeldung über den Drehzahl-Istwert *xₙ* des Pitchmotors 43, so dass der Umrichter 45 über die Anpassung des Betriebsstroms für den Pitchmotor 43 dessen Drehzahl an die Soll-Drehzahl des Pitchmotors 43 anpassen kann. Hier sind somit zwei Regelschleifen ineinander geschachtelt.

Die Pitchregelschleife 21 ist für jedes der drei Rotorblätter 14^{I}, 14^{II} und 14^{III} eigens vorhanden, von denen jedoch nur eines beispielhaft dargestellt ist.

Zusätzlich zur Pitchregelschleife 21 und der Betriebsführung 16 sind zwei regelungstechnische Beobachter 23, 25 dargestellt. Diese können alternativ zueinander oder tatsächlich beide realisiert sein. Die regelungstechnischen Beobachter 23, 25 erhalten einerseits in der Gondel und andererseits in der Rotornabe die Soll-Pitchwinkel *w_{α}* bzw. *w'ₐ*. Sie simulieren dann die weitere Pitchregelschleife 21 und somit das reale Verhalten der Pitchverstellung einschließlich Signallaufzeiten. Ihr Output sind simulierte Pitchwinkel-Istwerte *x_{α(Obs)}* bzw. *x'_{α(Obs)}*. Diese sollten im Idealfall sehr nahe bei den realen gemessenen Werten liegen und werden in den Überwachungsvorrichtungen 19 bzw. 19A oder alternativ in einer einzigen Überwachungsvorrichtung, welche beispielsweise in der Pitchsteuerung in der Nabe oder in der Topbox 35 in der Gondel 15 angeordnet ist, zusammengefasst. Die Anordnung der Überwachungsvorrichtung 19A in der Rotornabe 31 hat den Vorteil, dass keine Signale über den Schleifring 33 übertragen werden müssen. In der oder den Überwachungsvorrichtung/en 19, 19A werden die simulierten Pitchwinkel-Istwerte *x_{α(Obs)}* bzw. *x'_{α(Obs)}* mit den Pitchwinkel-Istwerten *x_{α(A)}* und *x_{α(B)}* der Pitchwinkel-Istwertgeber 27, 29 verglichen. Die Überwachungsvorrichtungen 19, 19A können Teil der Betriebsführung 16 sein und somit bei Diskrepanzen zwischen den gemessenen und den simulierten Istwerten entsprechende Maßnahmen bis hin zur Störabschaltung einleiten.

Da die Beobachter 23, 25 die Pitchregelungen der Rotorblätter recht genau simulieren, kann eine Toleranz für Abweichungen zwischen simulierten und gemessenen Pitchwinkel-Istwerten sehr viel enger gesetzt werden als in der üblichen Istwert-Sollwert-Überwachung, beispielsweise ±1,2° oder weniger anstelle von ±4° oder mehr. Störabschaltungen können daher wesentlich früher als bislang eingeleitet werden und somit ungewollte Belastungen so stark entschärft werden, dass die Windenergieanlagen schwächer dimensioniert werden können als bisher.

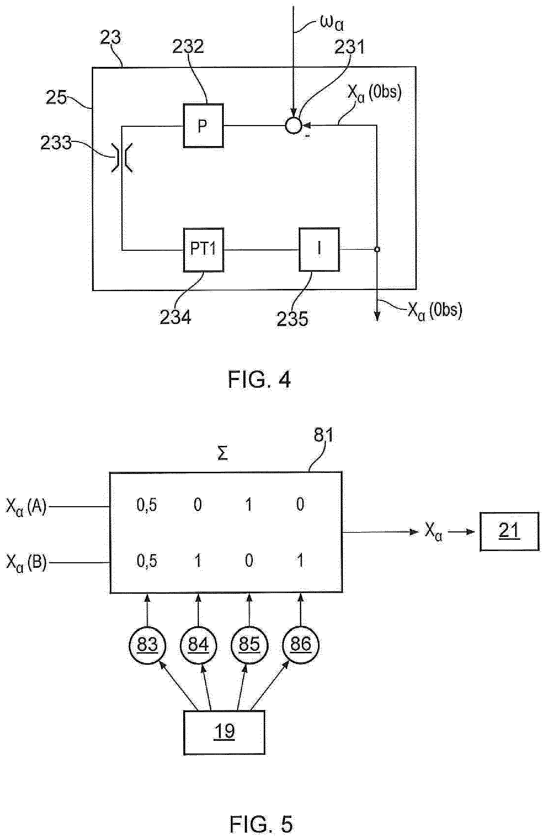

Fig. 4 stellt den prinzipiellen Aufbau eines regelungstechnischen Beobachters 23, 25 für eine Pitchregelung schematisch dar. Es handelt sich im Wesentlichen um eine Regelschleife, die ihren Anfang mit einem Differenzbilder 231 nimmt, in dem eine Differenz zwischen dem von außen angelegten Soll-Pitchwinkel *w_{α}* und einem in dem simulierten Regelkreis erzeugten simulierten Ist-Pitchwinkel *x_{α(Obs)}* bildet. Dieses Differenzsignal wird einem Proportional-Regelglied 232 zugeführt, dessen Ausgangssignal durch ein optionales Begrenzungsglied 233 zu einem Verzögerungsglied PT1 erster Ordnung 234 gegeben wird und anschließend einem I-Regelglied 235 zugeführt wird, das den simulierten Pitchwinkel-Istwert *x_{α(Obs)}* ausgibt, welcher einerseits als Ausgangssignal des regelungstechnischen Beobachters 23, 25 dient und andererseits zum Differenzbilder 231 zurückgeführt wird. In diesem simulierten Regelkreis entspricht das P-Regelglied 232 dem P-Regelglied 49 aus Fig. 3. Das Verzögerungsglied 234 simuliert die Verzögerung aus dem Motor, dem Gleichrichter, dem Getriebe und der allgemeinen Trägheit, während das I-Regelglied 235 das Verhalten des Rotorblatts an sich nachbildet, welches im Wesentlichen eine I-Charakteristik, also das zeitliche Verhalten eines I-Regelglieds, aufweist.

Die Anpassung der Regelparameter in den einzelnen Regelgliedern 232, 233, 234, 235 erfolgt sinnvollerweise durch detaillierte Streckensimulation und Messungen im Feld. Während der Inbetriebnahme, wenn also Inbetriebnahme-Personal vor Ort ist, werden vorteilhafterweise die Auslösekriterien für Störabschaltungen schärfer, d.h. enger, eingestellt als im eigentlichen Betrieb. Dies führt dazu, dass die Windenergieanlage 10 bei der Inbetriebnahme sehr gut kalibriert wird und es nach erfolgter Inbetriebnahme und Aufweitung der Auslösekriterien für Störabschaltungen nicht zu häufigen Störabschaltungen wegen unzureichend kalibrierter Blattsysteme bzw. unzureichend angepasster Beobachter kommt.

Fig. 5 zeigt schematisch ein Detail eines weiteren Ausführungsbeispiels einer erfindungsgemäßen Steuerung. Es handelt sich um eine Summierschaltung 81, in der aus den gemessenen Pitchwinkel-Istwerten *x_{α(A)}* und *x_{α(B)}* zu einem gemeinsamen Pitchwinkel-Istwert x_{α} zusammengefügt werden, der in die Pitchregelschleife 21 zurückgeführt wird. Die Überwachungsvorrichtung 19, wahlweise auch die Betriebsführung 16, hat dabei die Auswahl zwischen verschiedenen Betriebsmodi, nämlich einem AB-Betrieb 83, in dem beide als funktionierend erkannten Pitchwertgeber 27, 29 mit ihren gemessenen Istwerten jeweils zur Hälfte berücksichtigt werden. Hier kann die Gewichtung auch unterschiedlich eingestellt werden, beispielsweise mit 70:30 oder 30:70 oder entsprechenden anderen als sinnvoll erkannten Gewichtungen.

Ein B-Betrieb 84 wird gefahren, wenn der Pitchwinkel-Istwertgeber 27 fehlerhaft ist. In diesem Fall wird nur der gemessene Pitchwinkel-Istwert *x_{α(B)}* verwendet. Im umgekehrten Fall des A-Betriebs 85 wird nur der andere Pitchwinkel-Istwert *x_{α(A)}* verwendet. Im Fall eines Ruhemodus 86, beispielsweise im Teillastfall, wenn keine Pitchregelung durchgeführt wird und die Rotorblätter eingebremst sind, wird wiederum nur der Pitchwinkel-Istwert *x_{α(B)}* des optischen oder magnetischen Istwertgebers 29 an der Rotorblattwurzel verwendet.

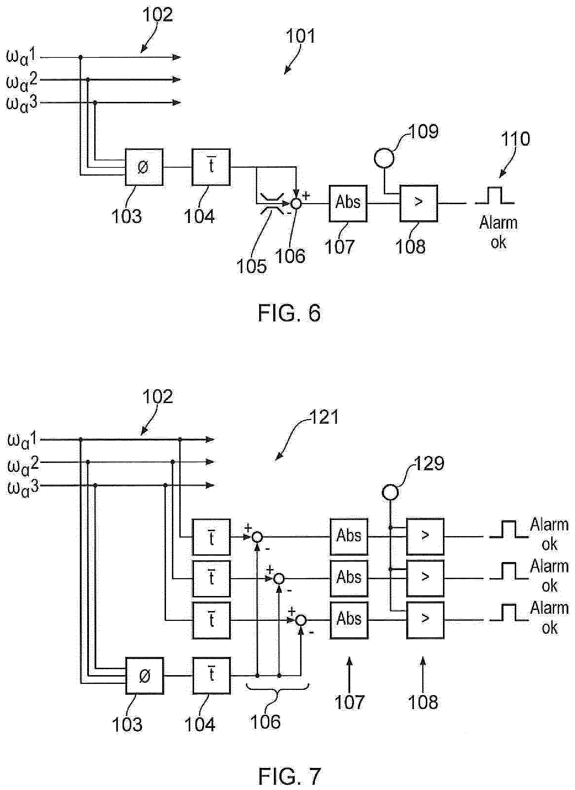

In den Figuren 6 und 7 werden zwei Ausführungsbeispiele erfindungsgemäßer Sollwert-Überwachungen schematisch dargestellt. Fig. 6 zeigt den Fall, dass die einzelnen individuellen Pitchwinkel-Sollwerte *w^{I}_{α}*, *w^{II}_{α}* und *w^{III}_{α}* auf die Plausibilität ihres Mittelwerts hin überwacht werden. Hierzu wird in einem Mittelwertbilder 103 ein Mittelwert der drei Sollwerte gebildet und einer zeitlichen Mittelung 104 unterworfen, beispielsweise über einen Zeitraum von 50 ms. Das Ausgangssignal des Mittelwerts wird anschließend aufgespalten und einerseits ohne Begrenzung und andererseits über eine Begrenzung 105 zu einem Differenzbilder 106 geführt, so dass das Differenzsignal nur dann von 0 abweicht, wenn das tatsächliche Signal die Begrenzung 105 überschreitet oder unterschreitet. Das Differenzsignal wird anschließend mit seinem Absolutwert 107 zu einem Komparator 108 geführt, der dieses Signal mit einem Grenzwert 109 vergleicht. Falls der Grenzwert 109 nicht überschritten ist, wird ein O.K.-Signal ausgegeben, falls der Grenzwert 109 doch überschritten ist, ein Alarmsignal 110. Hierdurch findet somit eine Überwachung des Mittelwerts der individuellen Sollwerte statt.
Fig. 7 stellt eine Überwachung der individuellen Sollwerte selbst dar. Ähnlich wie in Fig. 6 wird hierzu ein Mittelwert 103 der drei Sollwerte gebildet und zeitlich gemittelt (104). Auch die einzelnen individuellen Sollwerte *w^{I}_{α}*, *w^{II}_{α}* und *w^{III}_{α}* werden hierzu zeitlich gemittelt (104). Jeder einzelne zeitlich gemittelte individuelle Sollwert wird dann in einem Differenzbilder 106 mit dem zeitlich gemittelten Mittelwert der Sollwerte verglichen, wiederum von dieser Differenz der Absolutbetrag 107 genommen und in einem Komparator 108 mit einem Grenzwert 129 verglichen, wobei bei Überschreitung des Grenzwerts 129 ein Alarmsignal 110 ausgegeben wird, ansonsten ein O.K.-Status. Die entsprechenden Alarme können zu einer Störabschaltung führen.

Im Rahmen der Erfindung sind Merkmale, die mit "insbesondere" oder "vorzugsweise" gekennzeichnet sind, als fakultative Merkmale zu verstehen.

### Bezugszeichenliste

- 1: Wind
- 7: Pitchantrieb
- 10: Windenergieanlage
- 11: Turm
- 12: Rotor
- 13: Rotornabe
- 14, 14^{I-III}: Rotorblätter
- 15: Gondel
- 16: Betriebsführung
- 17: Pitchregler
- 18: Einzelblattsteuerung
- 19, 19A: Überwachungsvorrichtung
- 21: Pitchregelschleife
- 23, 25: regelungstechnischer Beobachter
- 27, 29: Pitchwinkel-Istwertgeber
- 31: Pitchsteuerung in der Nabe
- 33: Schleifring
- 35: Topbox in der Gondel
- 41: Pitchgetriebe
- 43: Pitchmotor
- 45: Umrichter
- 47: Begrenzungsglied
- 49: P-Regler
- 51: Differenzbilder
- 53: Verzögerungsglied
- 55: Begrenzungsglied
- 57: PI-Regelglied
- 59: Differenzbilder
- 61: Getriebe
- 63: Generator
- 65: Umrichter
- 67: Netzanschluss
- 70: Rotorblattanschluss
- 71: Pitchmotor
- 72: Pitchbremse
- 73: Pitchumrichter
- 81: Summierschaltung
- 83: AB-Betrieb
- 84: B-Betrieb
- 85: A-Betrieb
- 86: Ruhemodus
- 101: Überwachung der erlaubten Rate
- 102: individuelle Sollwertsignale
- 103: Mittelwertbildung
- 104: zeitliche Mittelung
- 105: Begrenzungsglied
- 106: Differenzbilder
- 107: Absolutwertbildung
- 108: Komparator
- 109: Grenzwert
- 110: Alarmsignal
- 129: Grenzwert
- 231: Differenzbilder
- 232: P-Regler
- 233: Begrenzungsglied
- 234: Verzögerungsglied
- 235: I-Regler

## Patentansprüche

1. Verfahren zur Überwachung einer Einzelblattverstellung einer Windenergieanlage (10), die einen Turm (11) und einen auf dem Turm (11) angeordneten Rotor (12) mit wenigstens zwei individuell pitchverstellbaren Rotorblättern (14) umfasst, denen jeweils ein Pitchantrieb (7) zugeordnet ist, wobei von einer Betriebsführung (16) oder einer Pitchsteuerung der Windenergieanlage (10) ein kollektiver Soll-Pitchwinkel für alle Rotorblätter (14) und/oder individuelle Soll-Pitchwinkel für jedes einzelne Rotorblatt (14) angefordert wird oder werden, wobei für zumindest ein Rotorblatt (14) in einer Pitchregelschleife (21) eine Pitchregelung durchgeführt wird, wobei dem Rotorblatt (14) wenigstens ein regelungstechnischer Beobachter (23, 25) zugeordnet ist, der ein dynamisches Pitchverhalten des Rotorblatts (14) simuliert und mit den gleichen Soll-Pitchwinkeln angesteuert wird wie die Pitchregelschleife (21) und einen simulierten Ist-Pitchwinkel ausgibt, wobei für das zumindest eine Rotorblatt (14) der simulierte Ist-Pitchwinkel des wenigstens einen regelungstechnischen Beobachters (23, 25) mit einem gemessenen Ist-Pitchwinkel verglichen wird und bei einer Abweichung des gemessenen Ist-Pitchwinkels vom simulierten Ist-Pitchwinkel, die einen Toleranzwert übersteigt, eine Störabschaltung der Windenergieanlage (10) eingeleitet wird, **dadurch gekennzeichnet, dass** für jedes Rotorblatt (14) wenigstens zwei voneinander messtechnisch unabhängige Pitchwinkel-Istwertgeber (27, 29) vorgesehen sind, die jeweils einen gemessenen Ist-Pitchwinkel ausgeben, wobei die wenigstens zwei gemessenen Ist-Pitchwinkel miteinander und mit dem entsprechenden simulierten Ist-Pitchwinkel verglichen werden, wobei zur Überwachung des oder der Pitchwinkel-Istwertgeber (27, 29) eine Zwangsdynamisierung in Form von regelmäßigen Blattverstellungen um kleine Winkelbeträge durchgeführt wird.

2. Verfahren nach Anspruch 1, **dadurch gekennzeichnet, dass** für jedes Rotorblatt (14) jeweils in einer eigenen Pitchregelschleife (21) eine individuelle Pitchregelung durchgeführt wird, wobei jedem Rotorblatt (14) wenigstens ein regelungstechnischer Beobachter (23, 25) zugeordnet ist, der ein dynamisches Pitchverhalten des Rotorblatts (14) simuliert und mit den gleichen Soll-Pitchwinkeln angesteuert wird wie die jeweilige Pitchregelschleife (21) und einen simulierten individuellen Ist-Pitchwinkel ausgibt, wobei für alle Rotorblätter (14) der jeweilige simulierte individuelle Ist-Pitchwinkel des wenigstens einen regelungstechnischen Beobachters (23, 25) mit einem jeweiligen gemessenen individuellen Ist-Pitchwinkel verglichen wird und bei einer Abweichung des gemessenen individuellen Ist-Pitchwinkels vom simulierten individuellen Ist-Pitchwinkel, die einen Toleranzwert übersteigt, eine Störabschaltung der Windenergieanlage (10) eingeleitet wird.

3. Verfahren nach Anspruch 1, **dadurch gekennzeichnet, dass** für alle Rotorblätter (14) der Windenergieanlage (10) in einer gemeinsamen Pitchregelschleife (21) eine Pitchregelung durchgeführt wird, wobei den Rotorblättern (14) wenigstens ein regelungstechnischer Beobachter (23, 25) zugeordnet ist, der ein dynamisches Pitchverhalten aller Rotorblätter (14) simuliert und mit den gleichen Soll-Pitchwinkeln angesteuert wird wie die Pitchregelschleife (21) und einen simulierten Ist-Pitchwinkel ausgibt, wobei für alle Rotorblätter (14) der simulierte Ist-Pitchwinkel des wenigstens einen regelungstechnischen Beobachters (23, 25) mit einem jeweiligen gemessenen individuellen Ist-Pitchwinkel verglichen wird und bei einer Abweichung des gemessenen individuellen Ist-Pitchwinkels vom simulierten Ist-Pitchwinkel, die einen Toleranzwert übersteigt, eine Störabschaltung der Windenergieanlage (10) eingeleitet wird.

4. Verfahren nach einem der Ansprüche 1 bis 3, **dadurch gekennzeichnet, dass** zusätzlich Sollwerte überwacht werden, die der, insbesondere individuellen, Pitchregelung zugrunde liegen, wobei ferner insbesondere die Sollwert-Überwachung in der Gondel (15) und/oder in der Rotornabe (13) erfolgt, wobei insbesondere in der Sollwert-Überwachung überwacht wird, dass die individuellen Soll-Pitchwinkel sich innerhalb eines Toleranzwerts von einem Mittelwert der individuellen Soll-Pitchwinkel oder von einem kollektiven Soll-Pitchwinkel befinden und/oder in der Sollwert-Überwachung eine Überwachung einer kollektiven Sollwertrate und/oder individueller Sollwertraten erfolgt, wobei insbesondere die kollektive Sollwertrate in einem Bereich von -3°/s bis +6°/s und/oder die individuellen Sollwertraten in einem Bereich von ±0,5°/s sein sollten.

5. Verfahren nach Anspruch 4, **dadurch gekennzeichnet, dass** ein Absolutbereich des oder der Soll-Pitchwinkel überwacht wird, wobei der Absolutbereich insbesondere zwischen -4° und +96° ist.

6. Verfahren nach einem der Ansprüche 1 bis 5, **dadurch gekennzeichnet, dass** eine minimale Sollwertrate bei großen Soll-Pitchwinkeln gegenüber kleineren Soll-Pitchwinkeln betragsmäßig reduziert wird, insbesondere auf weniger als 60% der betragsmäßig größeren minimalen Sollwertrate.

7. Verfahren nach einem der Ansprüche 1 bis 6, **dadurch gekennzeichnet, dass** der/die regelungstechnische/n Beobachter (23, 25) für das zumindest eine Rotorblatt (14) in der Rotornabe (13) und/oder in der Gondel (15) und/oder im Turm (11) angeordnet sind.

8. Verfahren nach einem der Ansprüche 1 bis 7, **dadurch gekennzeichnet, dass** bei einer signifikanten Abweichung eines gemessenen Ist-Pitchwinkels sowohl vom anderen gemessenen Ist-Pitchwinkel als auch vom simulierten Ist-Pitchwinkel ein Fehler des abweichenden Pitchwinkel-Istwertgebers festgestellt wird und/oder dass bei einer Übereinstimmung der gemessenen Ist-Pitchwinkel untereinander und einer gleichzeitigen Abweichung der gemessenen Ist-Pitchwinkel vom simulierten Ist-Pitchwinkel eine Störabschaltung eingeleitet wird, wobei ferner insbesondere nach dem Feststellen eines Fehlers eines Pitchwinkel-Istwertgebers (27, 29) eine Geberumschaltung erfolgt und die Windenergieanlage (10) wieder in Betrieb genommen wird.

9. Verfahren nach Anspruch 8, **dadurch gekennzeichnet, dass** die gemessenen Ist-Pitchwinkel für die insbesondere individuelle Pitchregelung zur Rückführung in die jeweilige Regelschleife (21) miteinander gemischt werden, insbesondere mit Gewichtungen in einem Bereich von 70:30 bis 30:70, insbesondere 50:50.

10. System zur Überwachung einer Einzelblattverstellung einer Windenergieanlage (10), die einen Turm (11) und einen auf dem Turm (11) angeordneten Rotor (12) mit wenigstens zwei individuell pitchverstellbaren Rotorblättern (14) umfasst, denen jeweils ein Pitchantrieb (7) zugeordnet ist, wobei eine Betriebsführung (16) oder eine Pitchsteuerung der Windenergieanlage (10) ausgebildet ist, einen kollektiven Soll-Pitchwinkel für alle Rotorblätter (14) und/oder individuelle Soll-Pitchwinkel für jedes einzelne Rotorblatt (14) anzufordern, wobei für zumindest ein Rotorblatt (14) eine Pitchregelschleife (21) umfasst ist, mittels der eine Pitchregelung durchgeführt wird, wobei dem Rotorblatt (14) wenigstens ein regelungstechnischer Beobachter (23, 25) zugeordnet ist, der ein dynamisches Pitchverhalten des Rotorblatts (14) simuliert, der mit den gleichen Soll-Pitchwinkeln angesteuert wird wie die Pitchregelschleife (21) und der ausgebildet ist, einen simulierten Ist-Pitchwinkel auszugeben, wobei eine Überwachungsvorrichtung (19, 19A) umfasst ist, die ausgebildet ist, für das zumindest eine Rotorblatt (14) den simulierten Ist-Pitchwinkel des regelungstechnischen Beobachters (23, 25) mit einem gemessenen Ist-Pitchwinkel zu vergleichen und bei einer Abweichung des gemessenen Ist-Pitchwinkels vom simulierten Ist-Pitchwinkel, die einen Toleranzwert übersteigt, eine Störabschaltung der Windenergieanlage (10) einzuleiten, **dadurch gekennzeichnet, dass** für jedes Rotorblatt (14) wenigstens zwei voneinander messtechnisch unabhängige Pitchwinkel-Istwertgeber (27, 29) vorgesehen sind, die jeweils einen gemessenen Ist-Pitchwinkel ausgeben, wobei die wenigstens zwei gemessenen Ist-Pitchwinkel miteinander und mit dem entsprechenden simulierten Ist-Pitchwinkel verglichen werden, wobei das System ausgebildet ist, zur Überwachung des oder der Pitchwinkel-Istwertgeber (27, 29) eine Zwangsdynamisierung in Form von regelmäßigen Blattverstellungen um kleine Winkelbeträge durchzuführen.

11. System nach Anspruch 10, **dadurch gekennzeichnet, dass** für jedes Rotorblatt (14) jeweils eine eigene Pitchregelschleife (21) umfasst ist, mittels der eine individuelle Pitchregelung durchgeführt wird, wobei jedem Rotorblatt (14) wenigstens ein regelungstechnischer Beobachter (23, 25) zugeordnet ist, der ein dynamisches Pitchverhalten des Rotorblatts (14) simuliert, der mit den gleichen Soll-Pitchwinkeln angesteuert wird wie die jeweilige Pitchregelschleife (21) und der ausgebildet ist, einen simulierten individuellen Ist-Pitchwinkel auszugeben, wobei eine Überwachungsvorrichtung (19, 19A) umfasst ist, die ausgebildet ist, für alle Rotorblätter (14) den jeweiligen simulierten individuellen Ist-Pitchwinkel des regelungstechnischen Beobachters (23, 25) mit einem jeweiligen gemessenen individuellen Ist-Pitchwinkel zu vergleichen und bei einer Abweichung des gemessenen individuellen Ist-Pitchwinkels vom simulierten individuellen Ist-Pitchwinkel, die einen Toleranzwert übersteigt, eine Störabschaltung der Windenergieanlage (10) einzuleiten.

12. System nach Anspruch 10, **dadurch gekennzeichnet, dass** für alle Rotorblätter (14) der Windenergieanlage (10) eine gemeinsame Pitchregelschleife (21) umfasst ist, mittels der eine Pitchregelung durchgeführt wird, wobei den Rotorblättern (14) wenigstens ein regelungstechnischer Beobachter (23, 25) zugeordnet ist, der ein dynamisches Pitchverhalten aller Rotorblätter (14) simuliert, der mit den gleichen Soll-Pitchwinkein angesteuert wird wie die Pitchregelschleife (21) und der ausgebildet ist, einen simulierten Ist-Pitchwinkel auszugeben, wobei eine Überwachungsvorrichtung (19, 19A) umfasst ist, die ausgebildet ist, für alle Rotorblätter (14) den simulierten Ist-Pitchwinkel des regelungstechnischen Beobachters (23, 25) mit einem jeweiligen gemessenen individuellen Ist-Pitchwinkel zu vergleichen und bei einer Abweichung des gemessenen individuellen Ist-Pitchwinkels vom simulierten Ist-Pitchwinkel, die einen Toleranzwert übersteigt, eine Störabschaltung der Windenergieanlage (10) einzuleiten.

13. System nach einem der Ansprüche 10 bis 12, **dadurch gekennzeichnet, dass** die Überwachungsvorrichtung (19, 19A) Mittel aufweist, ausgebildet und eingerichtet ist, ein Verfahren nach einem der Ansprüche 1 bis 9 auszuführen, wobei insbesondere die Überwachungsvorrichtung (19, 19A) ganz oder teilweise in die Betriebsführung (16) und/oder in den Pitchregler (17) und/oder in die Einzelblattsteuerung (18) der Windenergieanlage (10) integriert ist.

14. Windenergieanlage (10) mit einem Turm (11) und einem auf dem Turm (11) angeordneten Rotor (12) mit wenigstens zwei individuell pitchverstellbaren Rotorblättern (14), denen jeweils ein Pitchantrieb (7) zugeordnet ist, **dadurch gekennzeichnet, dass** die Windenergieanlage (10) ein System zur Überwachung einer Einzelblattverstellung nach einem der Ansprüche 10 bis 13 umfasst.

## Claims

1. A method of monitoring a single-blade adjustment of a wind energy installation (10) which comprises a tower (11) and a rotor (12) arranged on the tower (11) and having at least two rotor blades (14) whose pitch can be adjusted individually, each of which is assigned a pitch drive (7), wherein a collective target pitch angle for all rotor blades (14) and / or individual target pitch angles for each individual rotor blade (14) is or are requested by an operating control unit (16) or a pitch control unit of the wind energy installation (10), wherein a pitch control is carried out for at least one rotor blade (14) in a pitch control loop (21), wherein at least one control observer (23, 25) is assigned to the rotor blade (14), which observer simulates a dynamic pitch behaviour of the rotor blade (14) and is supplied with the same target pitch angles as the pitch control loop (21) and outputs a simulated actual pitch angle, wherein, for the at least one rotor blade (14), the simulated actual pitch angle of the at least one control observer (23, 25) is compared with a measured actual pitch angle and, in the event of a deviation of the measured actual pitch angle from the simulated actual pitch angle which exceeds a tolerance value, a fault shutdown of the wind energy installation (10) is initiated, **characterized in that** for each rotor blade (14) there are provided at least two pitch angle actual value transmitters (27, 29) which are independent from each other in terms of how they carry out measurements and which each output a measured actual pitch angle, wherein the at least two measured actual pitch angles are compared with each other and with the corresponding simulated actual pitch angle, wherein, in order to monitor the pitch angle actual value transmitter or transmitters (27, 29), a forced dynamisation in the form of regular blade adjustments by small angular amounts is carried out.

2. The method according to claim 1, **characterized in that** an individual pitch control is carried out for each rotor blade (14) in a respective separate pitch control loop (21), wherein at least one control observer (23, 25) is assigned to each rotor blade (14), which observer simulates a dynamic pitch behaviour of the rotor blade (14) and is supplied with the same target pitch angles as the respective pitch control loop (21) and outputs a simulated individual actual pitch angle, wherein, for all rotor blades (14), the respective simulated individual actual pitch angle of the at least one control observer (23, 25) is compared with a respective measured individual actual pitch angle and, in the event of a deviation of the measured individual actual pitch angle from the simulated individual actual pitch angle which exceeds a tolerance value, a fault shutdown of the wind energy installation (10) is initiated.

3. The method according to claim 1, **characterized in that** a pitch control is carried out in a common pitch control loop (21) for all rotor blades (14) of the wind energy installation (10), wherein at least one control observer (23, 25) is assigned to the rotor blades (14), which observer simulates a dynamic pitch behaviour of all rotor blades (14) and is supplied with the same target pitch angles as the pitch control loop (21) and outputs a simulated actual pitch angle, wherein, for all rotor blades (14), the simulated actual pitch angle of the at least one control observer (23, 25) is compared with a respective measured individual actual pitch angle and, in the event of a deviation of the measured individual actual pitch angle from the simulated actual pitch angle which exceeds a tolerance value, a fault shutdown of the wind energy installation (10) is initiated.

4. The method according to any one of the claims 1 to 3, **characterized in that**, in addition, target values are monitored which form the basis of the, in particular individual, pitch control, wherein further in particular the monitoring of the target values is carried out in the nacelle (15) and / or in the rotor hub (13), wherein the monitoring of the target values in particular involves monitoring that the individual target pitch angles are within a tolerance value from an average value of the individual target pitch angles or from a collective target pitch angle and / or a monitoring of a collective target value rate and / or individual target value rates takes place in the monitoring of the target values, in particular wherein the collective target value rate should be in a range from -3°/s to +6°/s and / or the individual target value rates in a range of ±0.5°/s.

5. The method according to claim 4, **characterized in that** an absolute range of the target pitch angle or angles is monitored, wherein the absolute range is in particular between -4° and +96°.

6. The method according to any one of the claims 1 to 5, **characterized in that** a minimum target value rate at large target pitch angles is reduced in magnitude compared with smaller target pitch angles, in particular to less than 60% of the larger minimum target value rate in magnitude.

7. The method according to any one of the claims 1 to 6, **characterized in that** the control observer(s) (23, 25) for the at least one rotor blade (14) is / are arranged in the rotor hub (13) and / or in the nacelle (15) and / or in the tower (11).

8. The method according to any one of the claims 1 to 7, **characterized in that**, in the case of a significant deviation of a measured actual pitch angle both from the other measured actual pitch angle and from the simulated actual pitch angle, an error of the deviating pitch angle actual value transmitter is detected and / or **in that**, in the case of the measured actual pitch angles matching one another and a simultaneous deviation of the measured actual pitch angles from the simulated actual pitch angle, a fault shutdown is initiated, wherein further, in particular after an error of a pitch angle actual value transmitter (27, 29) has been detected, a transmitter changeover takes place and the wind energy installation (10) is put back into operation.

9. The method according to claim 8, **characterized in that**, for the purpose of the, in particular individual, pitch control, the measured actual pitch angles are mixed with one another for feedback into the respective control loop (21), in particular with weightings in a range from 70:30 to 30:70, in particular 50:50.

10. A system for monitoring a single-blade adjustment of a wind energy installation (10) which comprises a tower (11) and a rotor (12) arranged on the tower (11) and having at least two rotor blades (14) whose pitch can be adjusted individually, each of which is assigned a pitch drive (7), wherein an operating control unit (16) or a pitch control unit of the wind energy installation (10) is arranged to request a collective target pitch angle for all rotor blades (14) and / or individual target pitch angles for each individual rotor blade (14), wherein a pitch control loop (21) is provided for at least one rotor blade (14), by means of which a pitch control is carried out, wherein at least one control observer (23, 25) is assigned to the rotor blade (14), which observer simulates a dynamic pitch behaviour of the rotor blade (14) and is supplied with the same target pitch angles as the pitch control loop (21) and which is arranged to output a simulated actual pitch angle, wherein a monitoring device (19, 19A) is provided, which is arranged to compare, for the at least one rotor blade (14), the simulated actual pitch angle of the control observer (23, 25) with a measured actual pitch angle and, in the event of a deviation of the measured actual pitch angle from the simulated actual pitch angle which exceeds a tolerance value, to initiate a fault shutdown of the wind energy installation (10), **characterized in that** for each rotor blade (14) there are provided at least two pitch angle actual value transmitters (27, 29) which are independent from each other in terms of how they carry out measurements and which each output a measured actual pitch angle, wherein the at least two measured actual pitch angles are compared with each other and with the corresponding simulated actual pitch angle, wherein, in order to monitor the pitch angle actual value transmitter or transmitters (27, 29), the system is arranged to carry out a forced dynamisation in the form of regular blade adjustments by small angular amounts.

11. The system according to claim 10, **characterized in that**, for each rotor blade (14), a respective individual pitch control loop (21) is provided, by means of which an individual pitch control is carried out, wherein each rotor blade (14) is assigned at least one control observer (23, 25) which observer simulates a dynamic pitch behaviour of the rotor blade (14) and is supplied with the same target pitch angles as the respective pitch control loop (21) and is arranged to output a simulated individual actual pitch angle, wherein a monitoring device (19, 19A) is provided which is arranged to compare, for all rotor blades (14), the respective simulated individual actual pitch angle of the control observer (23, 25) with a respective measured individual actual pitch angle and to initiate a fault shutdown of the wind energy installation (10) in the event of a deviation of the measured individual actual pitch angle from the simulated individual actual pitch angle which exceeds a tolerance value.

12. The system according to claim 10, **characterized in that** a common pitch control loop (21) is provided for all rotor blades (14) of the wind energy installation (10), by means of which a pitch control is carried out, wherein at least one control observer (23, 25) is assigned to the rotor blades (14), which observer simulates a dynamic pitch behaviour of all rotor blades (14) and is supplied with the same target pitch angles as the pitch control loop (21) and which is arranged to output a simulated actual pitch angle, wherein a monitoring device (19, 19A) is provided which is arranged to compare, for all rotor blades (14), the simulated actual pitch angle of the control observer (23, 25) with a respective measured individual actual pitch angle and to initiate a fault shutdown of the wind energy installation (10) in the event of a deviation of the measured individual actual pitch angle from the simulated actual pitch angle which exceeds a tolerance value.

13. The system according to any one of the claims 10 to 12, **characterized in that** the monitoring device (19, 19A) comprises means, is designed and arranged to carry out a method according to any one of the claims 1 to 9, wherein in particular the monitoring device (19, 19A) is fully or partially integrated into the operational control unit (16) and / or into the pitch control unit (17) and / or into the individual blade control (18) of the wind energy installation (10).

14. A wind energy installation (10) having a tower (11) and a rotor (12) which is arranged on the tower (11) and which has at least two individually pitch-adjustable rotor blades (14), each of which is assigned a pitch drive (7), **characterized in that** the wind energy installation (10) comprises a system for monitoring an individual blade adjustment according to any one of the claims 10 to 13.

## Revendications

1. Procédé servant à surveiller un ajustement individuel de pale d'une éolienne (10), qui comprend un mât (11) et un rotor (12), disposé sur le mât (11), avec au moins deux pales de rotor (14) à ajustement individuel de pas, auxquelles respectivement un entraînement de pas (7) est associé, dans lequel un angle de pas théorique collectif pour toutes les pales de rotor (14) et/ou des angles de pas individuels pour chaque pale de rotor (14) individuelle est ou sont demandés par un pilotage de fonctionnement (16) ou une commande de pas de l'éolienne (10), dans lequel un réglage de pas est effectué pour au moins une pale de rotor (14) dans un boucle d'asservissement de pas (21), dans lequel au moins un observateur (23, 25) technique en charge du réglage est associé à la pale de rotor (14), qui simule un comportement de pas dynamique de la pale de rotor (14) et est commandé avec les mêmes angles de pas théoriques que la boucle d'asservissement de pas (21) et délivre un angle de pas réel simulé, dans lequel l'angle de pas réel simulé de l'au moins un observateur (23, 25) technique en charge du réglage est comparé, pour l'au moins une pale de rotor (14), à un angle de pas réel mesuré et un arrêt pour cause de défaillance de l'éolienne (10) est initié dans le cas d'un écart de l'angle de pas réel mesuré par rapport à l'angle de pas réel simulé, qui dépasse une valeur de tolérance, **caractérisé en ce que** sont prévus, pour chaque pale de rotor (14), au moins deux capteurs de valeur réelle d'angle de pas (27, 29) indépendants les uns des autres sur le plan de la technique de mesure, qui envoient respectivement un angle de pas réel mesuré, dans lequel les aux moins deux angles de pas réels mesurés sont comparés les uns aux autres et à l'angle de pas réel simulé correspondant, dans lequel une dynamisation forcée est effectuée sous la forme d'ajustements de pale réguliers de petites valeurs d'angle aux fins de la surveillance du ou des capteurs de valeur réelle d'angle de pas (27, 29).

2. Procédé selon la revendication 1, **caractérisé en ce qu'**un réglage de pas individuel est effectué pour chaque pale de rotor (14) respectivement dans un boucle d'asservissement de pas (21) propre, dans lequel est associé, à chaque pale de rotor (14), au moins un observateur (23, 25) technique en charge du réglage, qui simule un comportement de pas dynamique de la pale de rotor (14) et est commandé avec les angles de pas théoriques identiques à ceux de la boucle d'asservissement de pas (21) respective et envoie un angle de pas réel individuel simulé, dans lequel l'angle de pas réel individuel simulé respectif de l'au moins un observateur (23, 25) technique en charge du réglage est comparé, pour toutes les pales de rotor (14), à un angle de pas réel individuel mesuré respectif et un arrêt pour cause de défaillance de l'éolienne (10) est initié dans le cas d'un écart de l'angle de pas réel individuel mesuré par rapport à l'angle de pas réel individuel simulé, qui dépasse une valeur de tolérance.

3. Procédé selon la revendication 1, **caractérisé en ce qu'**un réglage de pas est effectué pour toutes les pales de rotor (14) de l'éolienne (10) dans une boucle d'asservissement de pas (21) commune, dans lequel est associé, aux pales de rotor (14), au moins un observateur (23, 25) technique en charge du réglage, qui simule un comportement de pas dynamique de toutes les pales de rotor (14) et qui est commandé avec les angles de pas théoriques identiques à ceux de la boucle d'asservissement de pas (21) et envoie un angle de pas réel simulé, dans lequel l'angle de pas réel simulé de l'au moins un observateur (23, 25) technique en charge du réglage est comparé, pour toutes les pales de rotor (14), à un angle de pas réel individuel mesuré respectif et un arrêt pour cause de défaillance de l'éolienne (10) est initié dans le cas d'un écart de l'angle de pas réel individuel mesuré par rapport à l'angle de pas réel simulé, qui dépasse une valeur de tolérance.

4. Procédé selon l'une quelconque des revendications 1 à 3, **caractérisé en ce qu'**en supplément des valeurs théoriques sont surveillées, sur lesquelles se base la réglage de pas en particulier individuel, dans lequel en outre en particulier la surveillance de valeur théorique est effectuée dans la nacelle (15) et/ou dans le moyeu de rotor (13), dans lequel en particulier il est surveillé lors de la surveillance de valeur théorique que les angles de pas théoriques individuels se trouvent dans une valeur de tolérance d'une valeur moyenne des angles de pas théoriques individuels ou d'un angle de pas théorique collectif et/ou une surveillance d'un taux de valeur théorique collectif et/ou de taux de valeur théorique individuels est réalisée lors de la surveillance de valeur théorique, dans lequel en particulier les taux de valeur théorique collectif sont censés se situer dans une plage allant de -3°/s à +6°/s et/ou les taux de valeur théorique individuels sont censés de situer dans une plage de ± 0,5 °/s.

5. Procédé selon la revendication 4, **caractérisé en ce qu'**une plage absolue du ou des angles de pas théoriques est surveillée, dans lequel la plage absolue est comprise en particulier entre -4° et +96°.

6. Procédé selon l'une quelconque des revendications 1 à 5, **caractérisé en ce qu'**un taux de valeur théorique minimal est réduit en amplitude dans le cas d'angles de pas théoriques importants par rapport à des angles de pas théoriques plus petits, en particulier d'une valeur inférieure à 60 % des taux de valeurs théoriques minimaux plus importants en amplitude.

7. Procédé selon l'une quelconque des revendications 1 à 6, **caractérisé en ce que** l'observateur/les observateurs technique/techniques en charge du réglage (23, 25) pour l'au moins une pale de rotor (14) sont disposés dans le moyeu de rotor (13) et/ou dans la nacelle (15) et/ou dans le mât (11).

8. Procédé selon l'une quelconque des revendications 1 à 7, **caractérisé en ce que** dans le cas d'un écart significatif d'un angle de pas réel mesuré par rapport à la fois à l'autre angle de pas réel mesuré et à l'angle de pas réel simulé, une erreur du capteur de valeur réelle d'angle de pas divergent est constatée, et/ou que dans le cas d'une coïncidence entre les angles de pas réels mesurés entre eux et dans le cas d'un écart dans le même temps des angles de pas réels mesurés par rapport à l'angle de pas réel simulé, un arrêt pour cause de défaillance est initié, dans lequel en outre en particulier une fois une erreur d'un capteur de valeur réelle d'angle de pas (27, 29) constatée, une commutation de capteur est réalisée, et l'éolienne (10) est remise en fonctionnement.

9. Procédé selon la revendication 8, **caractérisé en ce que** les angles de pas réels mesurés pour le réglage de pas en particulier individuelle sont mélangés entre eux aux fins du retour dans la boucle d'asservissement de réglage (21) respective, en particulier avec des pondérations situées dans une plage allant de 70:30 à 30:70, en particulier de 50:50.

10. Système servant à surveiller un ajustement de pale individuel d'une éolienne (10), qui comprend un mât (11) et un rotor (12) disposé sur le mât (11) avec au moins deux pales de rotor (14) à ajustement individuel de pas, auxquelles respectivement un entraînement de pas (7) est associé, dans lequel un pilotage de fonctionnement (16) ou une commande de pas de l'éolienne (10) est réalisé ou réalisée pour demander un angle de pas théorique collectif pour toutes les pales de rotor (14) et/ou des angles de pas théoriques individuels pour chaque pale de rotor (14) individuelle, dans lequel une boucle d'asservissement de pas (21) est comprise pour l'au moins une pale de rotor (14), au moyen de laquelle un réglage de pas est effectué, dans lequel est associé, à la pale de rotor (14), au moins un observateur (23, 25) technique en charge du réglage, qui simule un comportement de pas dynamique de la pale de rotor (14), qui est commandé avec les angles de pas théoriques identiques à ceux de la boucle d'asservissement de pas (21), et qui est réalisé pour délivrer un angle de pas réel simulé, dans lequel un dispositif de surveillance (19, 19A) est compris, qui est réalisé pour comparer, pour l'au moins une pale de rotor (14), l'angle de pas réel simulé de l'observateur (23, 25) technique en charge du réglage à un angle de pas réel mesuré et pour initier un arrêt pour défaillance de l'éolienne (10) dans le cas d'un écart de l'angle de pas réel mesuré par rapport à l'angle de pas réel simulé, qui dépasse une valeur de tolérance, **caractérisé en ce que** pour chaque pale de rotor (14) sont prévus au moins deux capteurs de valeur réelle d'angle de pas (27, 29) indépendants les uns des autres sur le plan de la technique de mesure, qui envoient respectivement un angle de pas réel mesuré, dans lequel les au moins deux angles de pas réels mesurés sont comparés les uns aux autres et à l'angle de pas réel simulé correspondant, dans lequel le système est réalisé pour effectuer une dynamisation forcée sous la forme d'ajustements de pale réguliers de petites valeurs d'angle aux fins de la surveillance du ou des capteurs de valeur réelle d'angle de pas (27, 29).

11. Système selon la revendication 10, **caractérisé en ce que** pour chaque pale de rotor (14), respectivement une boucle d'asservissement de pas (21) propre est comprise, au moyen de laquelle un réglage de pas individuel est effectué, dans lequel est associé à chaque pale de rotor (14) au moins un observateur (23, 25) technique en charge du réglage, qui simule un comportement de pas dynamique de la pale de rotor (14), qui est commandé avec les angles de pas théoriques identiques à ceux de la boucle d'asservissement de pas (21) respective et qui est réalisé pour envoyer un angle de pas réel individuel simulé, dans lequel est compris un dispositif de surveillance (19, 19A), qui est réalisé pour comparer, pour toutes les pales de rotor (14) l'angle de pas réel individuel simulé respectif de l'observateur (23, 25) technique sur le plan du réglage à un angle réel individuel mesuré respectif et pour initier, dans le cas d'un écart de l'angle de pas réel individuel mesuré par rapport à un angle de pas réel individuel simulé, qui dépasse une valeur de tolérance, un arrêt pour défaillance de l'éolienne (10).

12. Système selon la revendication 10, **caractérisé en ce que** pour toutes les pales de rotor (14) de l'éolienne (10), une boucle d'asservissement de pas (21) commune est comprise, au moyen de laquelle un réglage de pas est effectué, dans lequel est associé aux pales de rotor (14) au moins un observateur (23, 25) technique en charge du réglage, qui simule un comportement de pas dynamique de toutes les pales de rotor (14), qui est commandé avec les angles de pas théoriques identiques à ceux de la boucle d'asservissement de pas (21) et qui est réalisé pour envoyer un angle de pas réel simulé, dans lequel un dispositif de surveillance (19, 19A) est compris, qui est réalisé pour comparer, pour toutes les pales de rotor (14), l'angle de pas réel simulé de l'observateur (23, 25) technique en charge du réglage à un angle de pas réel individuel mesuré respectif et pour initier un arrêt pour défaillance de l'éolienne (10) dans le cas d'un écart de l'angle de pas réel individuel mesuré par rapport à l'angle de pas réel simulé, qui dépasse une valeur de tolérance..

13. Système selon l'une quelconque des revendications 10 à 12, **caractérisé en ce que** le dispositif de surveillance (19, 19A) présente des moyens, est réalisé et mis au point pour exécuter un procédé selon l'une quelconque des revendications 1 à 9, dans lequel en particulier le dispositif de surveillance (19, 19A) est intégré en totalement ou en partie dans le pilotage de fonctionnement (16) et/ou dans le système régulateur de pas (17) et/ou dans la commande de pale individuelle (18) et/ou dans la commande de pale unique (18) de l'éolienne (10) .

14. Éolienne (10) avec un mât (11) et un rotor (12) disposé sur le mât (11) avec au moins deux pales de rotor (14) à pas ajustable individuellement, auxquelles respectivement un entraînement de pas (7) est associé, **caractérisé en ce que** l'éolienne (10) comprend un système servant à surveiller un ajustement de pale individuel selon l'une quelconque des revendications 10 à 13.
